# EUROPEAN PATENT APPLICATION

(11) **EP 2 105 902 A2**
(43) Date of publication of application: **30.09.2009**
(21) Application number: 09003913.2
(22) Date of filing: 18.03.2009
(51) Int. Cl.: G08G 1/09, G01C 21/26, H04H 20/55, G08G 1/0967

(54) **Navigation device and method for processing navigation information thereof**

(30) Priority: 28.03.2008 TW 97111213
(71) Applicant: Pegatron Corporation, Taipei City 112, Taiwan (CN)
(72) Inventor: Sun, Wei-Yang, Tapei City 112 (TW); Chen, Jeng-hung, Tapei City 112 (TW); Tseng, Yu-Hung, Tapei City 112 (TW)
(74) Representative: Jordan, Volker Otto Wilhelm

(57) **Abstract**

A navigation device and a method for processing navigation information thereof are disclosed. The navigation device includes a display unit, a radio data system (RDS) receiver module, and a central processing unit (CPU). The RDS receiving module is used for receiving an RDS signal and providing the RDS data to the CPU. The CPU converts the RDS data into Open TMC protocol information, runs a navigation program to parse the Open TMC protocol information to obtain traffic information, and makes the display unit displays the traffic information.

## Description

### BACKGROUND OF THE INVENTION

### 1. Field of the invention

The invention relates to a portable electronic device and, more particularly, to a navigation device providing the radio data system (RDS) - traffic message channel (TMC) service.

### 2. Description of the prior art

The radio data system (RDS) is a European standard of data broadcast system established by European broadcast union (EBU) in 1984. Comparing with the medium wave, the main feature of the RDS city-traffic-information broadcast is that it is implemented by inserting digital code in the broadcast signal based on the currently existing modulation broadcasting resource. That is, the subcarrier frequency band of RDS is a particular defined band in each modulation broadcasting band, and it is separated from the sound signal so that it does not interference radio receiving and the quality of the radio signal. When a radio detects and parses the digital code, corresponding functions can be provided.

The traffic information channel (TMC), which is a digital coding system, is a particular project of the multiple RDS applications to broadcast the real-time traffic and weather information. The basic operating concept of TMC is that data are transmitted and received without being heard, and are decoded by the TMC decoder embedded in the car audio and the navigation system to present to drivers. The most significant feature of TMC is that it can monitor the traffic condition of the route in real-time to provide warnings or route-changing suggestions to benefit the drivers. Thereby, the accuracy of the traffic condition ahead present by the car navigation system can be improved by combining the TMC information with the map navigation.

The RDS-TMC is one of the information distributing application utilizing the RDS technology. The traffic information is coded according to a standard before broadcasting, and then distributed by the RDS technology. The terminal device in the car can receive the coded information and allow the information to be presented in different ways, such as by texts, by simple figures, or by sound. A particular radio receiver is needed to receive the RDS-TMC signal. The main component of the particular radio receiver is a TMC card (also called an RDS-TMC receiving module) which stores the specific drive route information.

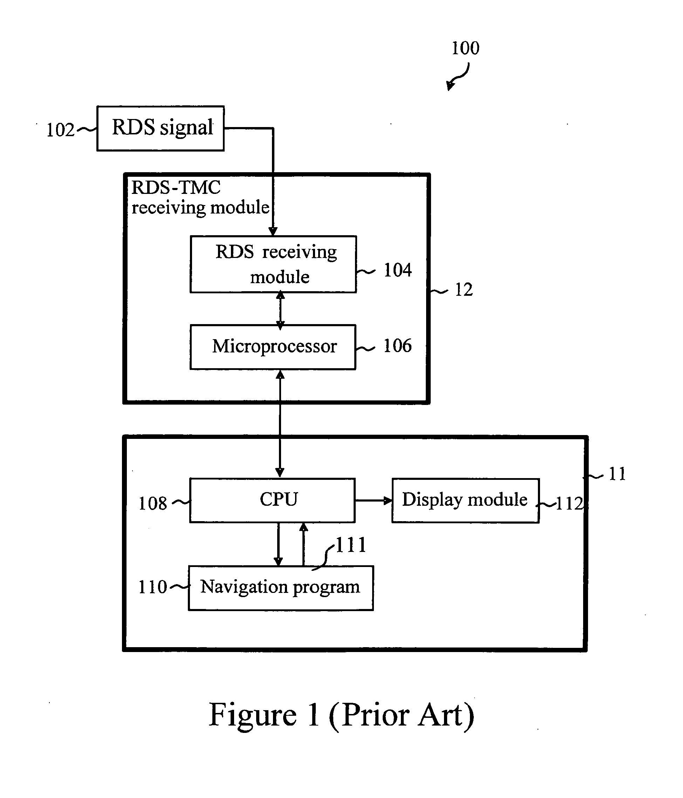

Fig. 1 is a functional block diagram of a navigation device with a conventional RDS-TMC receiving module. As shown in Fig. 1, the conventional navigation device 100 includes a navigation device body 11 and the RDS-TMC receiving module 12. The navigation device body 11 further includes a central processing unit (CPU) 108, a storage unit 110, and a display unit 112, wherein the storage unit 110 stores a navigation program 111. The RDS-TMC receiving module 12 further includes an RDS receiving module 104 and a microprocessor 106.

In the navigation device 100, the RDS receiving module 104 is used for receiving an RDS signal 102 to obtain an RDS data. Then, the RDS receiving module 104 transmits the RDS data to the microprocessor 106.

After receiving the RDS data, the microprocessor 106 in the RDS-TMC receiving module 12 transforms the RDS data into data of a specific private format (such as the format conforming to the GNS protocol). Then, the CPU 108 reads the particular private protocol data from the microprocessor 106, runs the navigation program 111 to parse the particular private protocol data, and makes the display unit 112 display the road traffic information.

However, the known RDS-TMC receiving module 12 has the following shortcomings:
1. Expensive cost. The conventional RDS-TMC receiving module must be purchased from some particular companies and the whole module is expensive, which causes the expansive cost of the navigation device.
2. Limitation of product development. Since the microprocessor of the known RDS-TMC receiving module outputs data followed the protocol defined by different companies, the navigation software must support the protocol followed by the RDS-TMC receiving module of the particular company to recognize the data outputted by the microprocessor to implement the function of navigation. Therefore, the navigation device manufacturer must investigate which navigation software corresponds to the particular RDS-TMC receiving module. Moreover, if a new function is needed, a new program should be programmed into the microprocessor, which is very inconvenience.
3. Slow processing speed. Before receiving the RDS signals, the RDS receiving module needs to be initialized by the microprocessor to transmit the RDS data to the microprocessor. Afterwards, the conventional CPU reads the private protocol data from the microprocessor to perform relevant processing. Such procedure is time-consuming.

### SUMMARY OF THE INVENTION

The objective of the invention is to provide a navigation device and a method for processing navigation information to improve the current technique.

According to a specific embodiment, the invention provides a navigation device which includes a display unit, radio data system (RDS) receiving module, and a central processing unit (CPU). The RDS receiving module is used for receiving an RDS signal and providing an RDS data. The CPU is coupled with the display unit and the RDS receiving module for receiving the RDS data, converting the RDS data into Open TMC protocol information, running a navigation program to parse the Open TMC protocol information to obtain traffic information, and making the display unit display the traffic information.

According to a specific embodiment, the invention further provides a method for processing navigation information, which includes steps of: a) receiving the RDS signal; b) directly converting, via a CPU of a navigation device, the RDS signal into the Open TMC protocol information; and c) parsing the Open TMC protocol information to obtain the traffic information.

According to an embodiment of the invention, the navigation device further includes a storage unit for storing the navigation program and an electronic map for combining the traffic information and the electronic map.

According to an embodiment of the invention, the navigation device further includes a connection interface for providing content update for the storage unit.

According to an embodiment of the invention, the navigation device further includes an alarm device coupled to the CPU, wherein the alarm device generates an alert message when the traffic information corresponds to a preset situation. The preset situation is the approaching of a speed restrictive block, a freeway toll station exit, or a gas station.

The advantage of the invention is that the receiving RDS signal can be transferred into Open TMC protocol information using only a CPU of the navigation device. Therefore, only an RDS receiving module needs to be bought so that the cost of the hardware can be cut down. Besides that, one single CPU for converting the receiving the RDS signal can simplify the operating procedure and accelerate the speed of processing.

These and other features, aspects, and advantages of the present invention will become better understood with regard to the following description, appended claims, and accompanying drawings.

### BRIEF DESCRIPTION OF THE APPENDED DRAWINGS

Fig. 1 is a block diagram of a navigation device with a conventional RDS-TMC receiving module.
Fig. 2 is a block diagram showing the navigation device according to a preferred embodiment of the invention.
Fig. 3 is a flowchart of processing the RDS signal.

### DETAILED DESCRIPTION OF THE INVENTION

The navigation device of the embodiment takes a portable navigation device for example, which can be a communication device with navigation function. In other embodiment, the navigation device also can be an ultra mobile PC (UMPC), a personal digital assistant (PDA), or other portable electronic product with the same function. Of course, in other embodiment, the navigation device also can be a car navigation device.

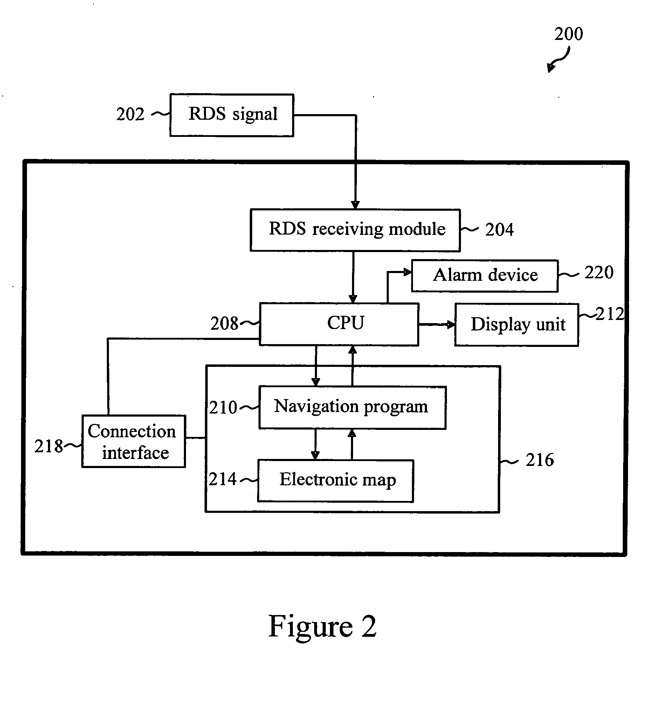

Fig. 2 is a block diagram showing the navigation device according to a preferred embodiment of the invention. The navigation device 200 provided by the embodiment includes an RDS receiving module 204, a CPU 208, a storage unit 216, a display unit 212, a connection interface 218, and an alarm device 220, wherein the storage unit 216 stores a navigation program 210 and an electronic map 214.

The RDS receiving module 204 is coupled with an antenna (not showing) and the CPU 208. The CPU 208 is coupled with the storage unit 216, the display unit 212, the connection interface 218, and the alarm device 220.

In the embodiment, the storage unit 216 is a non-volatile memory, such as a flash memory. In other embodiment, the storage unit 216 also can be a small hard disk driver (HDD) device, a HDD device, a solid state disk, or other storage device with the similar function.

In the embodiment, the display unit 212 can be an organic light-emitting diode (OLED) touch panel, which also supports the multi-touch function. In other embodiment, the display unit 212 also can be a stereo projection device or other display device with the similar function.

In the embodiment, the alarm device 220 is preferred to be a sound mechanism that can play many remainder or suggestion sound prerecorded and stored in the storage unit 216. In other embodiment, the alarm device 220 also can integrate a lighting device (not showing), a display unit 212, and the sound mechanism to provide a better remainder/suggestion interface.

In the embodiment, the connection interface 218 is preferred to be a mini USB connector which can connect to an online computer via a USB cable to provide update for the navigation program 210 or the electronic map 214 in the storage unit 216. In other embodiment, the connection interface 218 also can be other type connector. Besides, in a special embodiment, the connection interface 218 can be a wireless network module, by which the navigation device 200 can connect to the internet to update the navigation program 210 or the electronic map 214.

Refer to Fig.2. The RDS receiving module 204 as described above, couples to an antenna (not showing) and receives an RDS signal 202 via the antenna to obtain the RDS data, and then the RDS receiving module 204 transmits the RDS data to the CPU 208 of the navigation device 200. The CPU 208 processes the receiving RDS data, converts it into an open protocol data, and transmits it to the navigation program 210 to parse it.

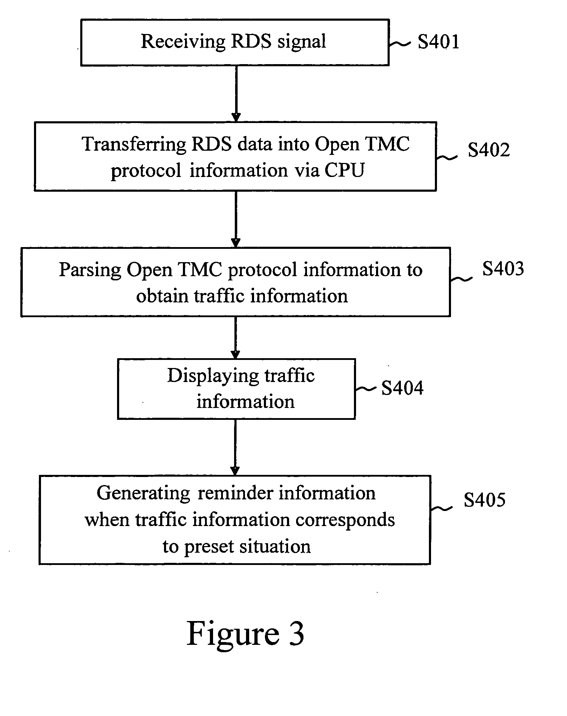

Fig. 3 is a flowchart of processing the RDS signal. Refer to Fig.2 and Fig. 3. In the step S401, the RDS receiving module 204 receives the RDS signal 202 via the antenna and obtains the RDS data from the RDS signal 202.

In the step S402, the CPU 208 of the navigation device 200 provided in the embodiment reads the RDS data provided by the RDS receiving module 204 and converts the RDS data into Open TMC protocol information. Besides, the operation of converting the RDS signal is implemented by a firmware (software program). The firmware can be stored in a storage unit 216. Moreover, the firmware can be updated whenever so that it is flexible in design and modification.

The Open TMC protocol is an open protocol in the field of the art, so the Open TMC protocol information can be parsed by most of the navigation software on the market.

The operation of converting the RDS signal is directly implemented by the CPU 208 of the navigation device 200. Comparing with that the microprocessor in the TMC card converting the RDS signal, the operation in the embodiment of the invention is faster. For example, the operating frequency of the microprocessor in conventional TMC card is about 8MHz, and the operating frequency of the CPU 208 of the navigation device 200 used in the embodiment of the invention is about 200∼400MHz, so that the processing speed is applying the solution faster in the embodiment of the invention.

Furthermore, the microprocessor in the conventional TMC card converts the RDS signal first, and then transmits the converted RDS signal to the CPU to do the follow-up processing. This processing method causes the slow processing speed.

In the step S403, the CPU 208 runs the navigation program 210 to parse the Open TMC protocol information to obtain traffic information. As the RDS data is directly converted into the Open TMC protocol information by CPU 208 which has high compatibility, the version of the navigation program 210 is not limited to a special version and can be chosen with high flexibility.

In the step S404, the display unit 212 displays the real-time traffic information. The traffic information for example is a text massage or a suggestion of changing drive route. In the preferred embodiment, the traffic information is showed embedded in the electronic map 214 when the display unit 212 displays the traffic information to improve the accuracy of reporting the traffic condition.

In the step S405, the CPU 208 determines whether the traffic information corresponds to a preset situation. If the traffic information corresponds to the preset situation, the CPU 208 drives the alarm device 220 to generate corresponding an alert message or suggestion information. The preset situation is the situation of a speed restrictive block, a freeway toll station exit, or a gas station appearing in front, or other situation needed to remind the user. For example: when a gas station is 500 meter ahead, the CPU 308 can drive the alarm device 220 to generate a reminding sound such as "a gas station is 500 meters ahead"; when there is an accident 1 km ahead, the CPU 308 can drive the alarm device 220 to generate a suggestion massage to suggest the user to change the drive route.

From the above, only an RDS receiving module and a CPU are needed in the embodiment of the invention, and operation of converting of the RDS signal is directly processed by the powerful CPU of the navigation device. Therefore, the operation of converting the RDS signal can be implemented by adding a software drive program in the operation system of the navigation device, so that the cost of hardware can be cut down and the processing speed of converting the RDS signal can be improved.

Although the present invention has been described in considerable detail with reference to certain preferred embodiments thereof, the disclosure is not for limiting the scope of the invention. Persons having ordinary skill in the art may make various modifications and changes without departing from the scope and spirit of the invention. Therefore, the scope of the appended claims should not be limited to the description of the preferred embodiments described above.

A navigation device and a method for processing navigation information thereof are disclosed. The navigation device includes a display unit, a radio data system (RDS) receiver module, and a central processing unit (CPU). The RDS receiving module is used for receiving an RDS signal and providing the RDS data to the CPU. The CPU converts the RDS data into Open TMC protocol information, runs a navigation program to parse the Open TMC protocol information to obtain traffic information, and makes the display unit displays the traffic information.

## Claims

1. A navigation device, comprising:
a display unit;
a radio data system (RDS) receiving module for receiving an RDS signal and providing an RDS data; and
a central processing unit (CPU) coupled with the display unit and the RDS receiving module for receiving the RDS data, wherein the CPU converts the RDS data into Open TMC protocol information, and runs a navigation program to parse the Open TMC protocol information to obtain traffic information and make the display unit display the traffic information.

2. The navigation device according to claim 1, wherein the navigation device further comprises a storage unit for storing the navigation program and an electronic map so that the traffic information can be combined with the electronic map.

3. The navigation device according to claim 1, wherein the navigation device further comprises a connection interface for providing content update for the storage unit.

4. The navigation device according to claim 1, further comprising:
an alarm device coupled to the CPU, wherein the alarm device generates an alert message when the traffic information corresponds to a preset situation.

5. The navigation device according to claim 4, wherein the preset situation is the approaching of a speed restrictive block, a freeway toll station exit, or a gas station.

6. A method for processing navigation information, comprising the steps of:
a) receiving an RDS signal;
b) directly converting, via a CPU of a navigation device, the RDS signal into an Open TMC protocol information; and
c) parsing the Open TMC protocol information to obtain traffic information.

7. The method according to claim 6, wherein the step c) further comprises:
parsing the Open TMC protocol information using a navigation program; and
output the traffic information.

8. The method according to claim 6, wherein after the step c), the method further comprises:
d) displaying the traffic information.

9. The method according to claim 8, wherein after the step d), the method further comprises:
generating an alert message when the traffic information corresponds to a preset situation.

10. The method according to claim 9, wherein the preset situation is the approaching of a speed restrictive block, a freeway toll station exit, or a gas station.
